# EUROPÄISCHE PATENTSCHRIFT

(11) **EP 0 193 037 B1**
(45) Veröffentlichungstag und Bekanntmachung des Hinweises auf die Patenterteilung: **22.12.1993**
(21) Anmeldenummer: 86101852.1
(22) Anmeldetag: 13.02.1986
(51) Int. Cl.: G01N 21/78, G01N 31/22

(54) **Verwendung eines chemisch sensitiven Bauelementes**
The use of a chemically sensitive construction element
Utilisation d'un elément de construction chimiquement sensible

(30) Priorität: 26.02.1985 DE 3506686
(43) Veröffentlichungstag der Anmeldung: 03.09.1986
(73) Patentinhaber: SIEMENS AKTIENGESELLSCHAFT, 80333 München (DE)
(72) Erfinder: Kimmel, Heinrich, Dr., D-8520 Buckenhof (DE); Montag, Bernhard, D-8550 Forchheim (DE); Gumbrecht, Walter, Dr., D-8520 Erlangen (DE)

(56) Entgegenhaltungen:
- EP-A- 0 120 231
- FR-A- 1 562 225
- US-A- 3 754 867
- US-A- 4 019 862
- US-A- 4 248 597
- US-A- 4 407 960
- PATENT ABSTRACTS OF JAPAN, Band 6, Nr. 175 (P-141)[1053], 9. September 1982; & JP-A-57 93 253
- Ullmanns Encyklopädie der technischen Chemie, 4. Auflage, 1977, Band 13, S. 183-189

## Beschreibung

Die Erfindung betrifft die Verwendung eines chemisch sensitiven Bauelementes zur Bestimmung und zum Nachweis von Gasen und Dämpfen.

Zur Bestimmung des Partialdruckes von Gasen kann nach bekannten Verfahren der relevante Gasanteil in einem bestimmten Luftvolumen mittels eines Prüfröhrchens erfaßt werden. Für jede Messung ist aber ein neues Röhrchen erforderlich. Die Messung des Partialdruckes von Gasen mit einem Massenspektrometer ist infolge des hohen Anschaffungspreises dieser Vorrichtung kostspielig. Vielfach sind die vom Massenspektrometer gelieferten Differenzierungen und genauen Auswertungen auch nicht erforderlich. Die preisgünstigeren, bislang bekannten und eingesetzten chemisch sensitiven Sensoren, wie Sensoren mit aufgeheizten Metallwendeln oder Metalloxidhalbleitern, können nur bei hohen Temperaturen und nur für einige Wenige Gase oder Dämpfe eingesetzt werden, beispielsweise für Rauchgas und für den Sauerstoff in Autoabgasen sowie zur Bestimmung von Wasserstoff und Sauerstoff (Regelungstechnische Praxis, 26. Jahrgang, 1984, Heft 7, Seite 299).

Aufgabe der Erfindung ist es, zur Bestimmung und zum Nachweis von Lösungsmitteldämpfen geeignete Bauelemente anzugeben, die hinsichtlich Größe und Preis mit integrierten Schaltkreisen (IC) kompatibel sind.

In einer bekannten Anordnung zur Messung der Luftfeuchtigkeit ist eine feuchtigkeitsempfindliche Sensorschicht, beispielsweise ein Metallsalz, zwischen einer Strahlungsquelle und einem Detektor angeordnet. Unter der Einwirkung der Feuchtigkeit ändert die Sensorschicht, d.h. das Metallsalz, die Farbe und damit das elektrische Ausgangssignal des Detektors, beispielsweise einer Photozelle (französische Patentschrift 1 562 225).

In einer bekannten Ausführungsform eines Gassensors wird die Strahlung einer Strahlungsquelle durch die reversible Farbänderung einer Sensorschicht geändert und dann photoelektrisch verarbeitet. Die Sensorschicht ändert ihren pH-Wert und muß somit Feuchtigkeit enthalten, und deshalb ist sie für Lösungsmitteldämpfe ungeeignet (US-Patentschrift 3 754 867).

Bei einem bekannten System zur visuellen Anzeige einer Sterilisation mit Ethylenoxid kann als Indikator die Leukobase eines Triphenylmethanfarbstoffes, wie "Michler's Hydrol", und eine saure Komponente vorgesehen sein. In Verbindung mit Ethylenoxid als Sterilisationsgas wird dabei eine irreversible Farbänderung erhalten, die bleiben soll (US-Patentschrift 4 407 960).

Die Erfindung beruht nun auf der Erkenntnis, daß man bei der Zuführung von Lösungsmitteldämpfen eine reversible Farbänderung erhält, und sie besteht in der Verwendung eines chemisch sensitiven Bauelementes, welches ein optisches Filter mit einem Gemisch aus mindestens einem basischen Triphenylmethanfarbstoff oder -farbbildner und mindestens einer aciden Verbindung als chemisch sensitive Komponente sowie Mittel zur photoelektronischen Messung von Farb- und/oder Transparenzänderungen aufweist, zur Bestimmung und zum Nachweis von Aceton-, Alkohol-, Chloroform und Ethylacetatdämpfen, wobei eine reversible Farb- und/oder Transparenzänderung des Filters auftritt.

Während der Dauer der Einwirkung der Lösungsmitteldämpfe wird an einer oder mehreren Substanzen der chemisch sensitiven Komponente eine reversible Farbreaktion ausgelöst, die photoelektronisch gemessen werden kann. Ein Bauelement mit dieser Komponente leitet aus der chemischen Zusammensetzung und Konzentration der Lösungsmitteldämpfe ein elektrisches Signal ab, das durch eine Elektronik weiterverarbeitet werden kann.

Bei der Erfindung ist von besonderem Vorteil, daß die Bestimmung von Aceton, Alkohol, Chloroform und Ethylacetat bei Raumtemperatur erfolgen kann. Die Nachweisgrenze liegt im Bereich von 10 ppm.

Die chemisch sensitive Komponente des optischen Filters ist ein Gemisch aus einer Verbindung des Triphenylmethansystems und einer aciden Verbindung. Als Triphenylmethanfarbstoff dient insbesondere Kristallviolett; geeignet ist auch Bromthymolblau. Als acide Verbindung haben sich insbesondere Bisphenol A und Salicylsäure bewährt.

Das Gemisch mit dem Farbstoff bzw. der farbändernden Substanz, d.h. dem Farbbildner, kann auf einen Träger aufgebracht sein. Vielfach ist es auch günstig, das Gemisch in eine Matrix einzubetten. Durch die Wahl der Matrix läßt sich die Empfindlichkeit für unterschiedliche Gase unterschiedlich einstellen.

Die photoelektronische Messung erfolgt wahlweise durch Kombination einer Photodiode, eines Phototransistors, eines Photowiderstandes oder einer Photozelle einerseits mit einer Lumineszenzdiode, einer Glühlampe, einer Entladungslampe oder einer Strahlungsquelle andererseits nach dem Prinzip der Chemolumineszenz oder Photolumineszenz.

Weitere Einzelheiten der Erfindung werden anhand der Zeichnung, in der verschiedene Ausführungsbeispiele dargestellt sind, näher erläutert.

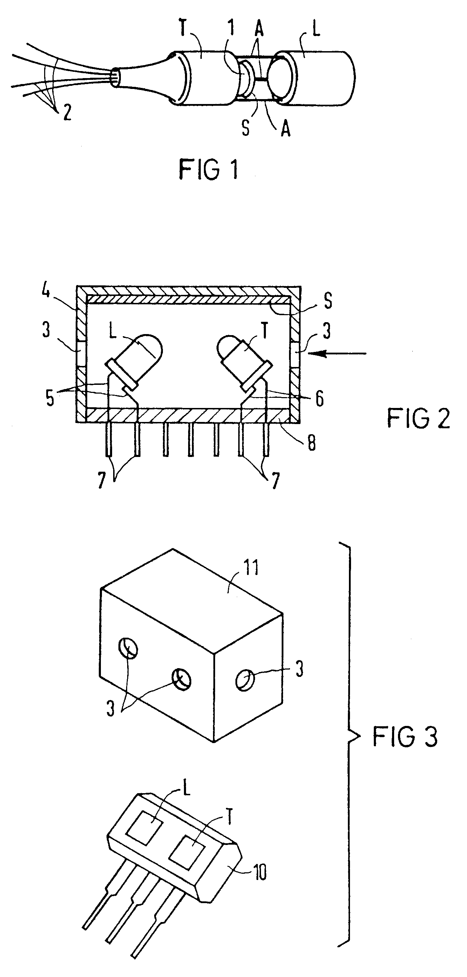

FIG 1 zeigt in perspektivischer Ansicht zwei zylindrische Körper, in welche eine Lumineszenzdiode L und ein Phototransistor T eingebettet sind. Die beiden Zylinder werden durch drei Abstandsstege A in ihrer gegenseitigen Lage fixiert. Zwei dieser Abstandsstege A übernehmen zugleich die Stromzuführung zu der Lumineszenzdiode L. Eine chemosensitive Schicht S ist unmittelbar auf der Frontlinse 1 des Phototransistors T angeordnet. Die Anschlußdrähte sind mit 2 bezeichnet.

FIG 2 zeigt im Schnitt ein DIL-Gehäuse in Seitenansicht. Das Gehäuse 4 ist mit mehreren Bohrungen 3 versehen, die einen Gaseintritt ermöglichen. Im Innern des Gehäuses 4 sind eine Lumineszenzdiode L und ein Phototransistor T angebracht. Das von der Lumineszenzdiode L emittierte und an der chemosensitiven Schicht S rückgestreute Licht wird vom Phototransistor T aufgefangen. Die Anschlüsse 5 der Lumineszenzdiode L und die Anschlüsse 6 des Phototransistors T sind mit verschiedenen Anschlüssen 7 der Bodenplatte 8 verbunden.

FIG 3 zeigt eine Miniatur-Reflexlichtschranke 10, in die eine Lumineszenzdiode L und ein Phototransistor T integriert sind. Die nicht dargestellte chemosensitive Schicht befindet sich im Innenraum einer auf die Lichtschranke 10 aufsetzbaren Kunststoffkappe 11, die mit Bohrungen 3 versehen ist.

## Patentansprüche

1. Verwendung eines chemisch sensitiven Bauelementes, welches ein optisches Filter mit einem Gemisch aus mindestens einem basischen Triphenylmethanfarbstoff oder -farbbildner und mindestens einer aciden Verbindung als chemisch sensitive Komponente sowie Mittel zur photoelektronischen Messung von Farb- und/oder Transparenzänderungen aufweist, zur Bestimmung und zum Nachweis von Aceton-, Alkohol-, Chloroform- und Ethylacetatdämpfen, wobei eine reversible Farb- und/oder Transparenzänderung des Filters auftritt.

2. Verwendung eines Bauelementes gemäß Anspruch 1, wobei Kristallviolett als Triphenylmethanfarbstoff dient.

3. Verwendung eines Bauelementes gemäß Anspruch 1 oder 2, wobei Bisphenol A oder Salicylsäure als acide Verbindung dient.

4. Verwendung eines Bauelementes gemäß einem der Ansprüche 1 bis 3, wobei das Filter aus einer Schicht besteht, die auf einem Träger angeordnet ist.

5. Verwendung eines Bauelementes gemäß einem der Ansprüche 1 bis 3, wobei das Gemisch in eine Matrix eingebettet ist.

## Claims

1. Use of a chemically sensitive unit which has an optical filter, as the chemically sensitive component, with a mixture of at least one basic triphenyl methane dye or colour former and at least one acid compound, and means for the photoelectronic measurement of colour and/or transparency changes, for detecting and determining acetone, alcohol, chloroform, and ethyl acetate vapours, by the occurrence of a reversible colour and/or transparency change of the filter.

2. Use of a unit according to claim 1, wherein crystal violet is used as the triphenyl methane dye.

3. Use of a unit as claimed in claim 1 or 2, wherein bisphenol A or salicylic acid is used as the acid compound.

4. Use of a unit as claimed in any one of claims 1 to 3, wherein the filter comprises a layer which is arranged on a carrier.

5. Use of a unit as claimed in any one of claims 1 to 3, wherein the mixture is embedded into a matrix.

## Revendications

1. Utilisation d'un élément constitutif sensible du point de vue chimique et qui comporte un filtre optique contenant un mélange d'au moins un colorant basique à base de triphénylméthane ou une substance colorante basique à base de triphénylméthane et d'au moins un composé acide en tant qu'un constituant sensible du point de vue chimique, ainsi que des moyens pour mesurer par voie photoélectronique des variations de couleur et/ou de transparence, pour la détermination et la détection de vapeurs d'acétone, d'alcool, de chloroforme et d'acétate d'éthyle, avec apparition d'une variation réversible de la couleur et/ou de la transparence du filtre.

2. Utilisation d'un élément constitutif suivant la revendication 1, avec utilisation de violet cristallisé en tant que colorant à base de triphénylméthane.

3. Utilisation d'un élément constitutif suivant la revendication 1 ou 2, dans lequel on utilise comme composé acide du bisphénol A ou de l'acide salicylique.

4. Utilisation d'un élément constitutif suivant l'une des revendications 1 à 3, dans lequel le filtre est constitué d'une couche, qui est disposée sur un support.

5. Utilisation d'un élément constitutif suivant l'une des revendications 1 à 3, dans lequel le mélange est incorporé à une matrice.
